# EUROPEAN PATENT SPECIFICATION

(11) **EP 1 901 060 B1**
(45) Date of publication and mention of the grant of the patent: **11.11.2009**
(21) Application number: 06120592.8
(22) Date of filing: 13.09.2006
(51) Int. Cl.: G01N 25/72

(54) **Thermographic detection system**
Thermografisches Detektionssystem
Système de détection thermographique

(43) Date of publication of application: 19.03.2008
(73) Proprietor: Ibea Ingenieurbüro für Elektronik und Automation GmbH, 22525 Hamburg (DE)
(72) Inventor: El Jarad, Akram, 26122, Oldenburg (DE); Lübcke, Holger, 25474, Ellerbek (DE)
(74) Representative: Michalski, Stefan

(56) References cited:
- WO-A-02/48720
- US-A1- 2002 134 817
- US-A1- 2004 028 113

## Description

The present invention is related to the field of thermography, which is in a wide sense especially a method for non-destructive evaluation of the thermal properties of a component and/or the analysis of the structure of a component e.g. for disbonds or inclusions.

In the field of thermography, usually devices are employed which comprise an heating and/or lighting means - which in a wide range of applications comprises flash lights - and a detecting means, which in a wide range of applications simply is an camera, especially an IR-sensitive or thermography camera. In a number of applications of the prior art, the flash is used in form of a ring with the camera in the center.

The US 2002/134 817 A1 discloses a method and an apparatus for automated, non - destructive evaluation of spot welds. The sample is heated on one side and the time-temperature characteristic is monitored by a camera. However, the energy used is higher as with the present invention.

The US 2004/028113 A1 discloses a method for inspecting an object and detecting defects. A sample is treated with a laser and monitored by an IR-camera.

In "Detection of subsurface defects using a hybrid heating and cooling imaging technique" (Appl. Phys. Letters, 88, 194101, 2006) a detection technique is disclosed combining sequential heating and cooling the inspected material. However, the energy used for heating is higher as with the present invention.

However, most of these applications especially bear the drawback that the energy used for the heating and/or lighting means is quite high (often in the range of several thousand Ws, especially for the judgement of metallic surfaces), on the other hand a time efficient analysis of a large number of components is often not possible, mostly to the difficulty of combining such large energies with a great scanning rate.

It is therefore an object of the present invention to provide a thermographic device and method which at least partly overcomes these drawbacks and able to allow a time-efficient scanning of a large number of components.

This object is solved by a device according to claim 1 of the present application. Accordingly, a thermographic detection system especially for judging the surface and/or surface-near structures of a component is provided, comprising
a) at least one heating and/or lighting means for selectively heating the component and/or selected parts thereof
b) at least one detecting means, especially a camera
whereby the heating and/or lighting means and the at least one detecting means are provided spacially separated from each other.

The term "spacially separated from each other " especially means and /or includes that the area which is heated and/or lighted by the at least one heating and/or lighting means and the area which is detected by the at least one detecting means do not overlap or overlap only to a small extent, preferably <10%, more preferred <5%.

However, it should be noted that the term "spacially separated from each other" especially includes that one side (or a part thereof) of a component which is used within the device is heated and/or lighted by the at least one heating and/or lighting means whereas the detecting means is directed towards another side of the same component, especially the side rear to said one side. This is in fact one embodiment of the present invention, as will be described later on.

Furthermore it should be noted that the term "spacially separated from each other" especially includes that the at least one heating and/or lighting means heats one part of the component, during step a) and b) the component is moved and in step b) essentially the same part is also detected by the detecting means. This is in fact one embodiment of the present invention, as will be described later on.

According to an embodiment of the present invention, the at least one heating and/or lighting means heats the component and/or selected parts thereof with ≤ 1000 Ws.

The term "heats the component and/or selected parts thereof with ≤ X Ws" especially means and/or includes that the at least one heating and/or lighting means delivers such energy; due to the actual application only a fraction of this energy might reach the component and/or selected parts thereof.

This has been shown to be advantageous for a wide range of applications within the present invention, especially to further reduce the time needed for judging the component.

Preferably the at least one heating and/or lighting means heats the component and/or selected parts thereof with ≤ 800 Ws, more preferred ≤ 500 Ws.

According to an embodiment of the present invention, the distance between the at least one heating and/or lighting means and the component during the heating is ≥10 mm and ≤ 200 mm. This has been shown to be advantageous for a wide range of applications within the present invention, especially in conjunction with a reduced power of the at least one heating and/or lighting means in order to further reduce the time needed for judging the component.

Preferably the distance between the at least one heating and/or lighting means and the component during the heating is ≥20 mm and ≤ 150 mm, more preferred the Adistance between the at least one heating and/or lighting means and the component during the heating is ≥50 mm and ≤ 100 mm.

According to an embodiment of the present invention, the at least one heating and/or lighting means comprises a flash lamp. These lamps have proven themselves in practice for a wide range of applications within the present invention.

According to an embodiment of the present invention, the flash lamp is operated at a voltage of ≥1500 V and ≤ 3000 V. It has been shown in practice that this voltage range is best suitable for a wide range of applications within the present invention for a rapid screening of a multitude components while maintaining a good judging reliability.

Preferably, the flash lamp is operated at a voltage of ≥2000 V and ≤ 2700 V, more preferred ≥2300 V and ≤ 2500 V

According to another embodiment of the present invention, the at least one detecting means comprises a camera.

According to a further embodiment of the present invention, the at least one detecting means comprises a bolometer camera, according to a further embodiment of the present invention, the at least one detecting means comprises a photonic camera. It has been shown that for a wide range of applications (depending on the actual application) these two cameras have proven themselves in practice.

According to a further embodiment of the present invention, the component is at least partly metallic, especially in the part of the component which is to be judged and/or examined by the thermographic detection system.

It has been shown in practice for a wide range of applications that the present detection system is especially very well suitable for judging and/or examining these types of components with a high scanning rate.

According to a further embodiment of the present invention, the component comprises a metallic flat part, especially in the part of the component which is to be judged and/or examined by the thermographic detection system. Preferably the thickness of said metallic flat part is ≥0,05 mm and ≤ 20 mm.

It has been shown in practice for a wide range of applications that the present detection system is especially very well suitable for judging and/or examining these types of components with a high scanning rate.

According to a further embodiment of the present invention, the component comprises a metallic flat part which is glued to a further metallic flat part, especially in the part of the component which is to be judged and/or examined by the thermographic detection system.

According to a further embodiment of the present invention, the thermographic detection system comprises at least one screen provided with the at least one heating and/or lighting means.

Preferably, the screen is provided so that ≥40% and ≤100%, more preferred ≥60% and ≤100%, most preferred ≥80% and ≤100% of the energy, especially the light of the at least one heating and/or lighting means is directed towards the component to be judged.

By doing so it has been shown for a wide range of applications within the present invention that the scanning rate of the components may be greatly increased.

According to a further embodiment of the present invention, the at least one screen has a parabolic or nearly-parabolic shape, whereby the length of the screen (measured in direction in the path of the light of the at least one heating and/or lighting means) is ≥50 mm and ≤150 mm, preferably ≥80 mm and ≤100 mm and/or the terminal diameter of the screen is ≥150 mm and ≤200 mm.

According to a further embodiment of the present invention, the distance between the screen and the component to be judged is ≥10 mm and ≤150 mm, preferably ≥30 mm and ≤100 mm.

According to a further embodiment of the present invention, the thermographic detection system comprises and/or uses at least one foil condensator, preferably with the at least one heating and/or lighting means.

By doing so it has been shown for a wide range of applications within the present invention that the scanning rate of the components may be greatly increased.

Preferably the capacity of the at least one foil condensator is ≥30 µF and ≤90 µF, preferably ≥50 µF and ≤70 µF.

According to a preferred embodiment of the present invention, ≥1 and ≤6 foil condensators are associated with one heating and/or lighting means.

According to a preferred embodiment of the present invention, the at least one heating and/or lighting means has a light distance between the electrodes of ≥250 mm and ≤900 mm, more preferred ≥300 mm and ≤800 mm and most preferred of ≥500 mm and ≤700 mm.

The present invention furthermore relates to a thermographic method especially for judging the surface and/or surface-near structures of a component, comprising the steps of
(a) heating the component and /or selected parts thereof,
(b) scanning at least partially the surface and/or surface-near structures
whereby steps (a) and (b) are carried out spacially separated from each other.

According to an embodiment of the present invention, the at least one heating and/or lighting means heats in step (a) the component and/or selected parts thereof with ≤ 1000 Ws.

According to an embodiment of the present invention, the at least one heating and/or lighting means heats in step (a) the component and/or selected parts thereof with ≤ 800 Ws, preferably ≤ 500 Ws.

According to an embodiment of the present invention, in step (a) the distance between the at least one heating and/or lighting means and the component during the heating is ≥10 mm and ≤ 200 mm.

According to an embodiment of the present invention, in step (a) the component is heated using a flash lamp.

According to an embodiment of the present invention, the flash lamp is operated at a voltage of ≥1500 V and ≤ 3000 V.

According to an embodiment of the present invention, the combined time for performing step (a) and (b) is ≥0.01 s and ≤ 1 s. This time has surprisingly shown for a wide range of applications to be sufficient to allow a reliable judgement of the component.

Preferably, the combined time for performing step (a) and (b) is ≥ 0.1 s and ≤0.5 s.

According to an embodiment of the present invention, between step (a) and (b) the component is moved.

According to an embodiment of the present invention, the method is a continuous method.

A system incorporating a device and/or the method according the invention can be of use in one or more of the following applications:
- Rapid screening devices, especially for the packaging industry
- Inspection systems for components comprising metallic surfaces, especially metallic lids

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

### BRIEF DESCRIPTION OF THE DRAWINGS

Additional details, features, characteristics and advantages of the object of the invention are disclosed in the subclaims, the figures and the following description of the respective figures, tables and examples, which -- in an exemplary fashionshow several embodiments and examples according to the invention.
- Fig. 1: shows a schematic side view of a thermographic detection system according to a first embodiment of the invention
- Fig. 2: shows a schematic side view of a thermographic detection system according to a second embodiment of the invention
- Fig. 3: shows a schematic side view of a thermographic detection system according to a third embodiment of the invention
- Fig. 4: shows a picture of a lid comprising a tin foil and an alumina sheet which was judged by a detection system according to the present invention
- Fig. 5: shows a thermographic picture of the lid of Fig. 4
- Fig. 6: shows a picture of the lid of Fig. 4 and 5 with the alumina sheet removed

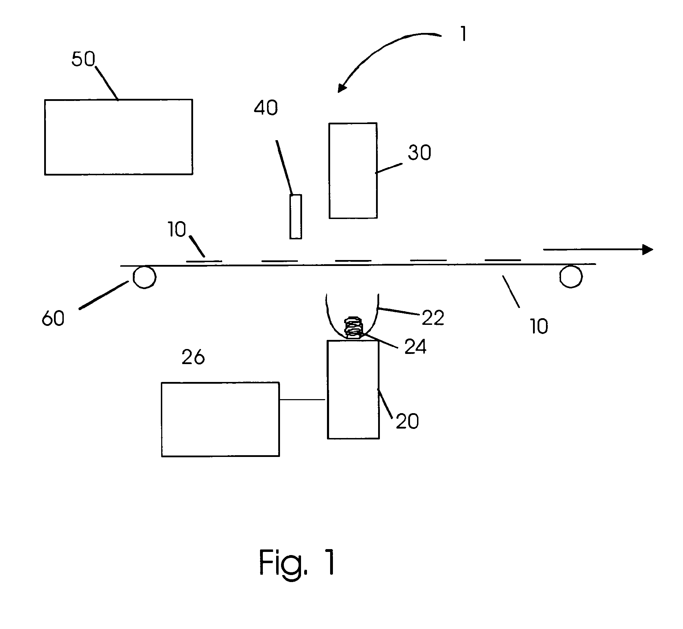

- Fig. 1: shows a schematic side view of a thermographic detection system 1
according to a first embodiment of the invention. In this detection systems 1 in a continuous fashion a multitude of components 10 are judged by the detection system, which are moved along a conveyor belt 60.

The detection system comprises an heating and/or lighting means 20 comprising a flash-light 24 which is partially surrounded by a lamp shade 22. The flash-light 24 and lamp-shade 22 are preferably as described above.

The lighting means 20 furthermore comprises a generator 26.

Spacially separated from the heating and/or lighting means 20 provided is a detection means 30 in form of a camera. In this particular embodiment, the flashlight 24 and the camera 30 are so provided towards each other that the flashlight 24 will heat (and light) the rear side of the component 10 whereas the camera 30 is directed towards the front side. Therefore the system 1 according to Fig. 1 works in transmission mode.

The detection system furthermore comprises a trigger 40 for synchronizing the heating and/or lighting means 20 with the camera 30 as well as a PC 50 for collecting and judging the data.

It has been shown in practice for many applications within the present invention that an embodiment according to Fig. 1 works suitably in a triggered mode. Preferably the time between the lighting and the detection by the camera is ≥10 ms and ≤ 100 ms, more preferred ≥20 ms and ≤ 60 ms.

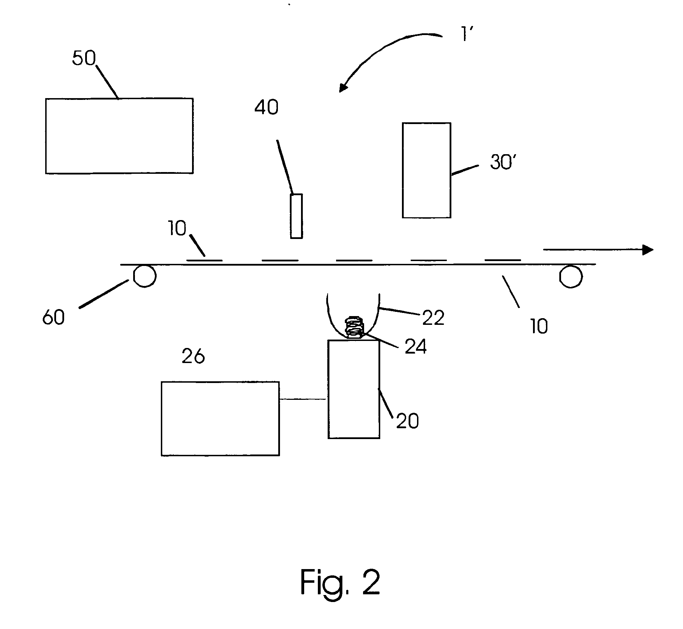

Fig. 2 shows a schematic side view of a thermographic detection 1' system according to a second embodiment of the invention. The features and components of the system according to Fig. 2 which are identical with that of Fig. 1 will not be described in order to avoid repetitions.

The embodiment according to Fig. 2 differs from that of Fig. 1 that the component 10 is moved under the camera 30' before it is detected. It has been shown in practice for many applications within the present invention that an embodiment according to Fig. 2 works suitably in a continuos mode with a constant speed of the belt 60. It is clear to any skilled person in the art that preferably the speed of the belt is matched with e.g. the distance between the camera 30' and the lighting means 20 or further features of the systems - or vice versa the system is adapted to match a preselected speed of the belt 60.

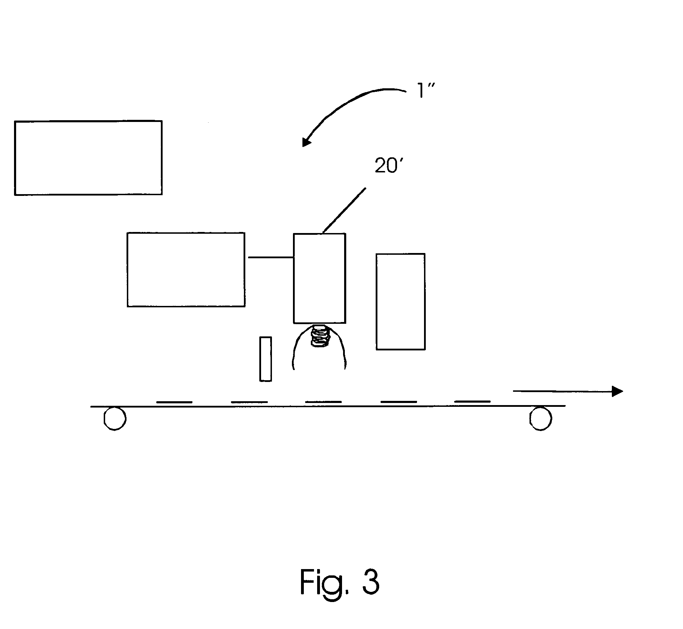

Fig. 3 shows a schematic side view of a thermographic detection system according to a third embodiment of the invention. The features and components of the system according to Fig. 3 which are identical with that of Fig. 1 and/or Fig. 2 will not be described in order to avoid repetitions.

In this embodiment, both the lighting means 20' and the camera are directed towards the same side of the component. This device 1" therefore works in reflection mode. It has been shown in practice for many applications within the present invention that an embodiment according to Fig. 3 works suitably in a continuos mode with a constant speed of the belt, which is preferably higher than in the system according to Fig.1 and/or 2.

It has been shown for a wide range of applications within the present invention that the speed of the belt can be set to be ≥1 m/s, for some applications even higher.

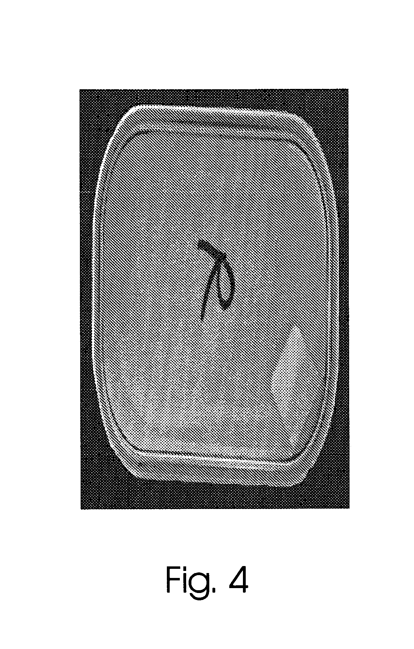

Fig. 4 shows a picture of an "Easy-Peeling"-lid comprising a first metallic sheet of tin foil (approx. thickness 0,3 mm) on which a second sheet of aluminum with an approx. thickness of 0,1 mm was glued.

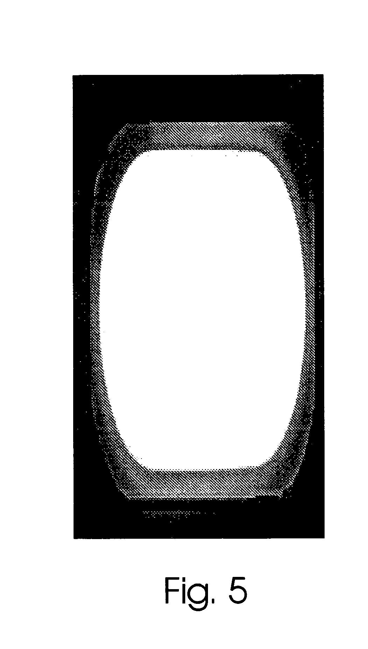

Fig. 5 shows a thermographic picture of the lid of Fig. 4, where a thermographic picture (in transmission mode) according to the present invention was taken. As can be seen in the Figure, in the lower left corner the quality of the adhesive sealing between the tin fold and the aluminum is inadequate.

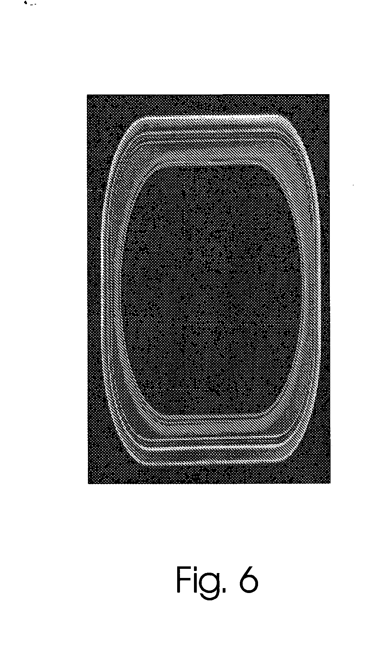

Fig. 6 shows a picture of the lid of Fig. 5 and 6 where the aluminum foil was removed. After the removal it could be confirmed that in fact in the lower left corner there was only weak glueing between the tin fold and the aluminum.

## Claims

1. A thermographic detection system (1) especially for judging the surface and/or surface-near structures of a component (10) comprising
a. at least one heating and/or lighting means (20) for selectively heating the component (10) and/or selected parts thereof
b. at least one detecting means (30), especially a camera
whereby the heating and/or lighting means (20) and the at least one detecting means (30) are provided spacially separated from each other and wherein the at least one heating and/or lighting means (20) comprises a flash lamp (24)
**characterized in that**
the at least one heating and/or lighting means (20) is arranged to deliver an energy of ≤ 1000 Ws

2. The system according to claim 1, whereby the distance between the at least one heating and/or lighting means (20) and the component (10) during the heating is ≥10 mm and ≤ 200 mm

3. The system according to claim 1 or 2, whereby the flash lamp (24) is operated at a voltage of ≥2000 V and ≤ 3000 V

4. A thermographic method especially for judging the surface and/or surface-near structures of a component (10), comprising the steps of
a) heating the component (10) and /or selected parts thereof using a flash lamp (24)
b) scanning at least partially the surface and/or surface-near structures
whereby steps (a) and (b) are carried out spacially separated from each other,
**characterized in that**
step a) is performed with said flashlamp (24) arranged to deliver an energy of ≤ 1000 Ws

5. The method according to claim 4, whereby the combined time for performing step (a) and (b) is ≥ 0.01 s and ≤ 1 s.

6. The method according to claim 4 or 5, whereby between step (a) and (b) the component (10) is moved.

7. The method according to any of the claims 4 to 6, whereby the method is a continuous method.

8. A system incorporating a device according to any of the claims 1 to 3 and/or the method according to any of the claims 4 to 7 and being used in one or more of the following applications:
- Rapid screening devices, especially for the packaging industry
- Inspection systems for components comprising metallic surfaces, especially metallic lids

## Patentansprüche

1. Thermografische Erfassungsvorrichtung (1), insbesondere zum Bestimmen von Oberflächenstrukturen oder oberflächennahen Strukturen einer Komponente (10), mit:
a) mindestens einer Heiz- und/oder Beleuchtungseinrichtung (20) zum selektiven Erwärmen der Komponente (10) und/oder ausgewählter Teile davon; und
b) mindestens einer Erfassungseinrichtung (30), insbesondere einer Kamera;
wobei die mindestens eine Heiz- und/oder Beleuchtungseinrichtung (20) und die mindestens eine Erfassungseinrichtung (30) räumlich voneinander beabstandet angeordnet sind, und wobei die mindestens eine Heiz- und/oder Beleuchtungseinrichtung (20) eine Blitzlampe (24) aufweist;
**dadurch gekennzeichnet, dass**
die mindestens eine Heiz- und/oder Beleuchtungseinrichtung (20) dazu geeignet ist, eine Energie von ≤ 1000 Ws zu liefern.

2. Vorrichtung nach Anspruch 1, wobei der Abstand zwischen der mindestens einen Heiz- und/oder Beleuchtungseinrichtung (20) und der Komponente (10) während des Heizvorgangs ≥ 10 mm und ≤ 200 mm beträgt.

3. Vorrichtung nach Anspruch 1 oder 2, wobei die Blitzlampe (24) mit einer Spannung von ≥ 2000 V und ≤ 3000 V betrieben wird.

4. Thermografisches Verfahren, insbesondere zum Bestimmen von Oberflächenstrukturen oder oberflächennahen Strukturen einer Komponente (10), mit den Schritten:
a) Erwärmen der Komponente (10) und/oder ausgewählter Teile davon unter Verwendung einer Blitzlampe (24);
b) mindestens teilweises Scannen von Oberflächenstrukturen und/oder oberflächennahen Strukturen;
wobei die Schritte a) und b) räumlich getrennt voneinander ausgeführt werden;
**dadurch gekennzeichnet, dass**
Schritt a) durch die Blitzlampe (24) ausgeführt wird, die dazu geeignet ist, eine Energie von ≤ 1000 Ws zu liefern.

5. Verfahren nach Anspruch 4, wobei die kombinierte Zeit zum Ausführen der Schritte a) und b) ≥ 0,01 s und ≤ 1 s beträgt.

6. Verfahren nach Anspruch 4 oder 5, wobei die Komponente (10) zwischen den Schritten a) und b) bewegt wird.

7. Verfahren nach einem der Ansprüche 4 bis 6, wobei das Verfahren ein kontinuierliches Verfahren ist.

8. System mit einer Vorrichtung nach einem der Ansprüche 1 bis 3 und/oder dem Verfahren nach einem der Ansprüche 4 bis 7, die/das in einer oder mehreren der folgenden Anwendungen verwendet wird:
- Hochgeschwindigkeitsprüf(Rapid Screening)geräten, insbesondere für die Verpackungsindustrie;
- Prüfsystemen für Komponenten, die Metalloberflächen aufweisen, insbesondere Metalldeckel.

## Revendications

1. Système de détection thermographique (1), en particulier pour déterminer les structures de la surface et/ou proches de la surface d'un composant (10) comprenant :
a. au moins un moyen de chauffage et/ou d'éclairage (20) pour chauffer sélectivement le composant (10) et/ou des parties sélectionnées de celui-ci
b. au moins un moyen de détection (30), en particulier une caméra
de sorte que le moyen de chauffage et/ou d'éclairage (20) et l'au moins un moyen de détection (30) sont disposés séparés l'un de l'autre dans l'espace et dans lequel l'au moins un moyen de chauffage et/ou d'éclairage (20) comprend une lampe à éclats (24)
**caractérisé en ce que**
l'au moins un moyen de chauffage et/ou d'éclairage (20) est agencé pour délivrer une énergie ≤ 1 000 Ws.

2. Système selon la revendication 1, dans lequel la distance entre l'au moins un moyen de chauffage et/ou d'éclairage (20) et le composant (10) pendant le chauffage est ≥ 10 mm et ≤ 200 mm.

3. Système selon là revendication 1 ou 2, dans lequel la lampe à éclats (24) est mise en oeuvre à une tension ≥ 2 000 V et ≤ 3 000 V.

4. Procédé thermographique, en particulier pour déterminer les structures de la surface et/ou proches de la surface d'un composant (10), comprenant les étapes consistant à :
a) chauffer le composant (10) et/ou des parties sélectionnées de ce dernier en utilisant une lampe à éclats (24)
b) balayer au moins partiellement les structures de la surface et/ou proches de la surface
dans lequel les étapes (a) et (b) sont effectuées en étant séparées l'une de l'autre dans l'espace,
**caractérisé en ce que**
l'étape a) est effectuée avec ladite lampe à éclats (24) agencée pour délivrer une énergie ≤ 1 000 Ws.

5. Procédé selon la revendication 4, dans lequel le temps combiné pour effectuer les étapes (a) et (b) est ≥ 0,01 s et ≤ 1 s.

6. Procédé selon la revendication 4 ou 5, dans lequel le composant (10) est déplacé entre les étapes (a) et (b).

7. Procédé selon l'une quelconque des revendications 4 à 6, dans lequel le procédé est un procédé continu.

8. Système incorporant un dispositif selon l'une quelconque des revendications 1 à 3 et/ou le procédé selon l'une quelconque des revendications 4 à 7 et étant utilisé dans une ou plusieurs des applications suivantes :
- dispositifs de filtrage rapides, en particulier pour l'industrie de l'emballage
- systèmes d'inspection pour des composants comprenant des surfaces métalliques, en particulier des couvercles métalliques.
